# EUROPEAN PATENT APPLICATION

(11) **EP 0 846 718 A1**
(43) Date of publication of application: **10.06.1998**
(21) Application number: 97121259.2
(22) Date of filing: 03.12.1997
(51) Int. Cl.: C08K 3/04, C08L 21/00, B60C 1/00

(54) **Sulfur-curable mix compositions, in particular for high-performance tires - tire tread formed using such mixes - and tire comprising such a tread**

(30) Priority: 06.12.1996 IT TO960992
(71) Applicant: Bridgestone Corporation, Tokyo 104 (JP)
(72) Inventor: Cataldo, Franco, 00128 Roma (IT)
(74) Representative: Jorio, Paolo

(57) **Abstract**

A sulfur-curable mix for producing tires or tire parts, in particular treads, of low rolling resistance and superior cold and wet weather performance; the mix including an elastomer in turn including one or more diene polymers or copolymers, and a filler composed of carbon black or mixtures of carbon black and silica, wherein at least part of the carbon black is oxidized carbon black, with or without a silane coupling agent. The mix preferably includes about 10 to 90 phr of oxidized carbon black, about 0 to 60 phr of traditional carbon black, about 0 to 60 phr of silica, and about 10 phr of a silane coupling agent.

## Description

The present invention relates to curable mix compositions containing a particular class of carbon blacks as a filler, and suitable for producing tire treads of low rolling resistance and superior cold and wet weather performance. The present invention also relates to the treads formed using such mixes, and to the tires comprising such treads.

As is known, to reduce fuel consumption, research is currently being conducted in the car industry to achieve tires with a low rolling resistance, but which at the same time provide for good road-holding and traction, even in cold and wet weather conditions.

To achieve such results, silica (silicon dioxide, SiO₂) is known to be used as a filler in tire mixes, particularly for manufacturing the tread, as a partial or total substitute for carbon black, the filler traditionally used in the tire industry.

Using silica as a filler, however, involves several drawbacks, mainly due to its high electrical resistivity: on account of the substantially insulating nature of silica, the electrostatic charge generated in the tire as it rolls along the road surface is accumulated on the surface of the tread, as opposed to being dissipated through it, thus resulting in discomfort to passengers, e.g. when getting out of the vehicle, and in the generation of an electromagnetic field, which, rotating together with the tire, may emit radiofrequency waves capable of interfering with any electronic devices the vehicle is equipped with.

Moreover, silica-filled mixes require the use of large quantities of silane coupling agents, which react with and promote adhesion of the silica to the rubber. In addition to being expensive, however, such coupling agents are only active within a very narrow temperature range and therefore require precise control of the mixing temperature.

It is an object of the present invention to provide a tire mix filler, which may be used as a total or partial substitute for currently used silica to eliminate the aforementioned drawbacks, and which at the same time provides for performance comparable, if not superior, to that of silica-filled mixes. More specifically, it is an object of the present invention to provide mix compositions for manufacturing tires of low rolling resistance and superior cold and wet weather performance.

According to the present invention, there are provided curable mix compositions, in particular for manufacturing tire treads, comprising at least one elastomer and at least one filler comprising carbon black or mixtures of carbon black and silica; characterized in that at least part of said carbon black is oxidized carbon black.

Here and hereinafter, the term "oxidized carbon black" is intended to mean very fine amorphous carbon obtained by incomplete combustion of hydrocarbons and with a high concentration of oxygenated groups, in particular on the surface of the particles.

More specifically, the carbon black used according to the present invention comprises particles with a surface concentration of oxygenated groups - calculated as hydroxyl or phenol groups - of at least 5 to 25 active sites per nm².

At least about 7% of the oxygenated groups is present on the surface of the particles, and at least some of these surface oxygenated groups comprise lactone and/or ketone and/or quinone and/or carbonyl and/or carboxyl and/or phenol and/or hydroxyl groups.

According to a preferred embodiment of the invention, the mix comprises an elastomer in turn comprising at least a diene polymer or copolymer, about 10 to 90 phr (parts by weight per 100 parts by weight of elastomer) of oxidized carbon black, about 0 to 60 phr of traditional carbon black, about 0 to 60 phr of silica, and about 0 to 10 phr of a silane coupling agent.

As is known, carbon blacks with a high surface concentration of oxygenated groups are obtainable using the so-called "channel" process, an equivalent so-called "Degussa gas black process" (hereinafter referred to simply as "Degussa process"), or by postprocessing carbon blacks, however they are obtained, with oxidizing agents such as nitric acid, ozone, etc. The carbon blacks normally used as fillers in rubber mixes, on the other hand, are obtained by a furnace process (and are therefore referred to as "furnace blacks").

Whereas traditional carbon blacks have a concentration of about 3.7 oxygenated groups (considered hydroxyl) per nm², the oxidized carbon blacks in question, measured thermogravimetrically, may have as many as 18.7 sites per nm², which is comparable with the concentration of silanolic groups on the surface of precipitated silica (about 14 groups per nm²).

Whereas, in the case of silica, all the active surface sites are silanolic and, as such, incompatible with rubber, so that a silane coupling agent is required to make the surface of the silica "wettable" by the rubber, and which is capable of chemically bonding the silica to the elastomeric chains after curing, not all the surface oxygen of the oxidized carbon blacks according to the present invention is in hydroxyl or phenol form, large part of it being inserted in other functional groups, e.g. lactone, carboxyl, quinone, ketone, etc., as shown by S. Wolff and U. Gorl, Intern. Rubber Conf. Essen, Germany, 24-27 June 1991. Since all these groups other than the hydroxyl group are directionally more compatible with rubber, and may react with it to produce adhesion between the rubber and filler known as the "bound rubber" effect, silane is not, strictly speaking, indispensable in the mixes containing oxidized carbon blacks according to the invention.

Though known to be used in the preparation of paints and pigments and in the rubber industry for producing damping elements, oxidized carbon blacks in general, and particularly those obtained using the channel or Degussa process, are not currently used in tire mixes.

The Applicant's researchers, on the other hand, have surprisingly discovered that, when applied to tire mixes, oxidized carbon blacks perform in exactly the same way as silica, especially as regards the viscoelastic properties imparted to the mix, and may therefore be used to advantage as a substitute for silica to produce mixes of low rolling resistance and excellent traction in cold or wet weather conditions. Tests in fact have shown the performance of mixes containing oxidized carbon blacks to be comparable, if not superior, to that of silica-filled mixes.

The problems posed by the accumulation of electrostatic charges typical of low-rolling-resistance tires currently produced using silica are therefore solved using carbon black, which, having a low electrical resistivity, enables dispersion of the electrostatic charges generated in the tire.

Finally, being generally easier to process, using carbon black as a substitute for silica provides for faster production and hence greater output.

The basic mixes preferably used in combination with the present invention are described in Italian Patent Applications n. T094A000541 and T094A000542, which are included herein as required for reference purposes, and which describe in detail the characteristics of the polymers and additives employed.

Further characteristics and advantages of the present invention will be made clear in the following description of a number of non-limiting embodiments.

### EXAMPLE 1

A typical oxidized carbon black known as CK3, produced using the Degussa process and the characteristics of which are shown in Table 1 in comparison with a traditional carbon black and a silica, was substituted for silica in a known mix formulation with different silane contents.

**TABLE 1**

| | TRADITIONAL CARBON BLACK | OXIDIZED CARBON BLACK | SILICA |
|---|---|---|---|
| % of surface oxygenated groups | 1,9 | 7,0 | 6,7 |
| N₂ S.A. [m²/g] | 115 | 83 | 180 |
| surface area [nm²/mol] | 1380·10¹⁸ | 996·10¹⁸ | 10980·10¹⁸ |
| minimum TGA estimated formula | C_{8,2}(C-OH)_{0,069} | C_{7,15}(C-OH)_{0,24} | (SiO₂)_{1,55}(OH)_{0,4} |
| bulk atom/surface atom ratio (calculated) | C/CO = 118,9:1 | C/CO = 32,3:1 | SiO₂/OH =3,9:1 |
| Surface active site concentration (calculated) | 3,7 (C-OH)/nm² | 18,7 (C-OH)/nm² | 14,1 (OH)/nm² |

More specifically, three traditional reference mixes (indicated A1, C1, E1) containing silica, and three identical mixes (indicated B1, D1, F1) containing oxidized carbon black in place of silica were prepared.

Operating in the normal way with a roughly 400-liter Banbury mixer at a rotor speed of 10 to 80 rpm, 250 kg of each mix with the compositions shown in Table 2 were prepared.

Mixing was performed in two stages: a first in which all the components except for the curing agents were mixed at a temperature of 130-180°C for 2-6 minutes; and a second in which the curing agents were added to complete the mix, operating at a temperature of below 100°C for 2-4 minutes. Finally, the mixes were molded into sheets and cured for 10-20 minutes at 160°C.

No processing problems were encountered with any of the mixes according to the invention. On the contrary, a reduction in curing time was observed as compared with the equivalent traditional mixes containing silica.

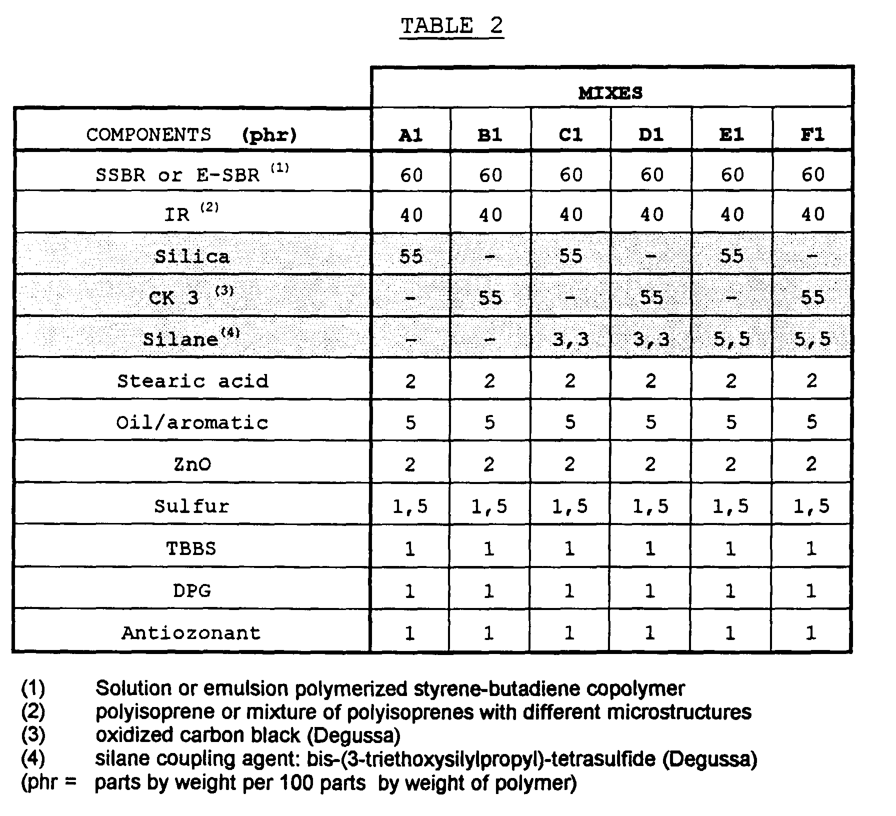

Specimens of each cured mix sheet were then tested in conformance with ASTM D2240, D2632, D2048, D412 to give the results are shown in Table 3. The results of tests to determine the viscoelastic performance of the mixes are expressed as indexes with reference to the properties demonstrated by the silica-filled reference mixes : these were assigned a reference value of 100 to which the properties of the corresponding mixes containing oxidized carbon black were referred.

As compared with the corresponding silica-filled mixes, the oxidized carbon black formulations were found to have a higher modulus and to generate considerably less heat.

According to the test results, tires produced from mixes containing CK3 may be expected to provide for improved cold and wet weather performance, especially as regards directional control, and for a lower rolling resistance as compared with those produced using the traditional reference mixes.

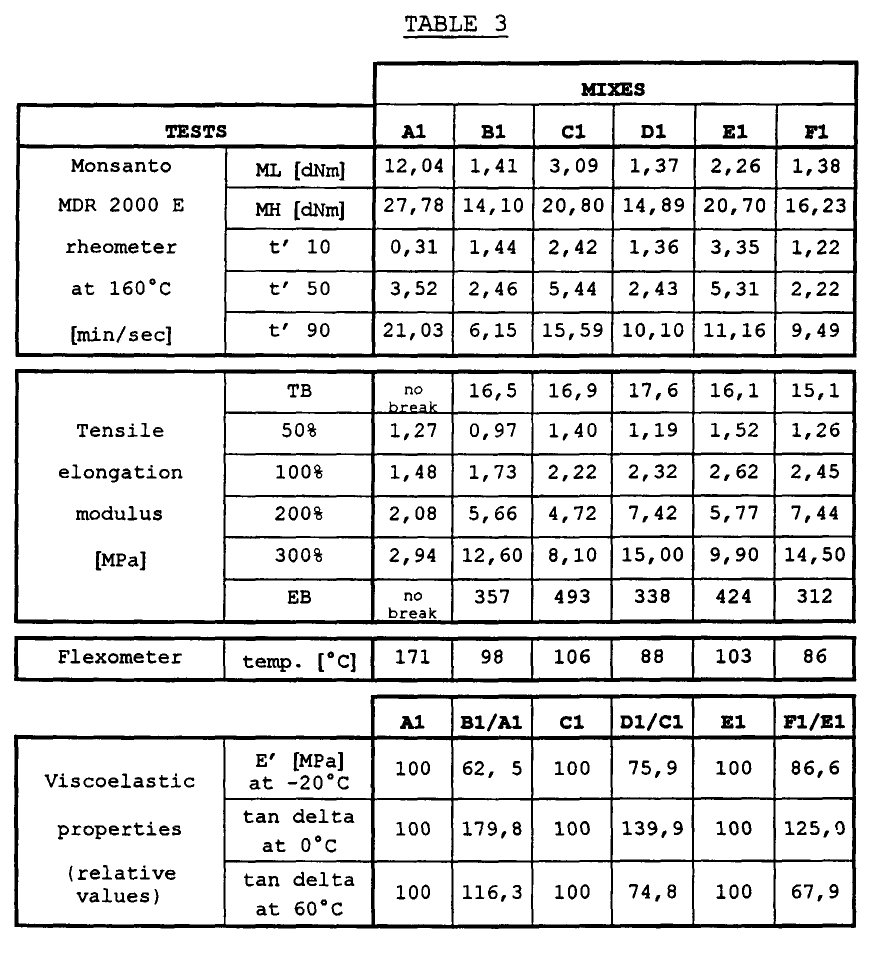

### EXAMPLE 2

The same oxidized carbon black (CK3) as in Example 1 was used for tread mixes in place of silica and in combination with a traditional carbon black.

More specifically, mixes with the compositions shown in Table 4 were prepared in the same way as in Example 1.

The known formulation (mix A2) contained a filler comprising equal quantities of silica and carbon black, plus 10% silane in relation to silica. Two formulations according to the invention were prepared: one by simply substituting CK3 for silica and reducing the silane content (mix B2), and the other using a 75/25 mix of traditional carbon black and CK3 with the same silane quantities as before (mix C2). In this case also, no processing problems were encountered, and curing time was reduced.

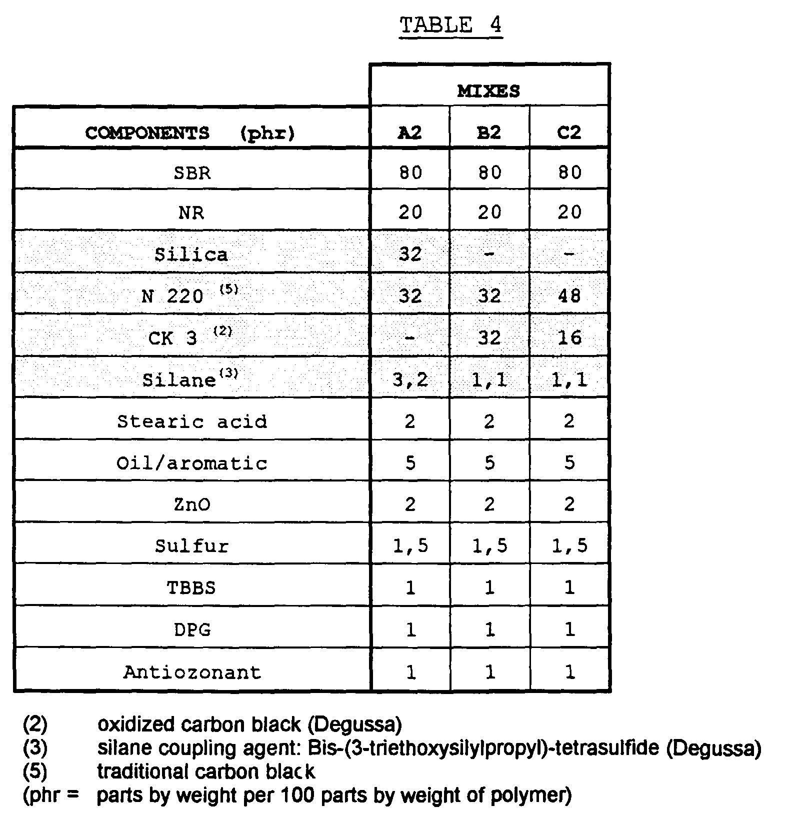

Specimens of each cured mix sheet were then tested in the same way as in Example 1 to give the results are shown in Table 5.

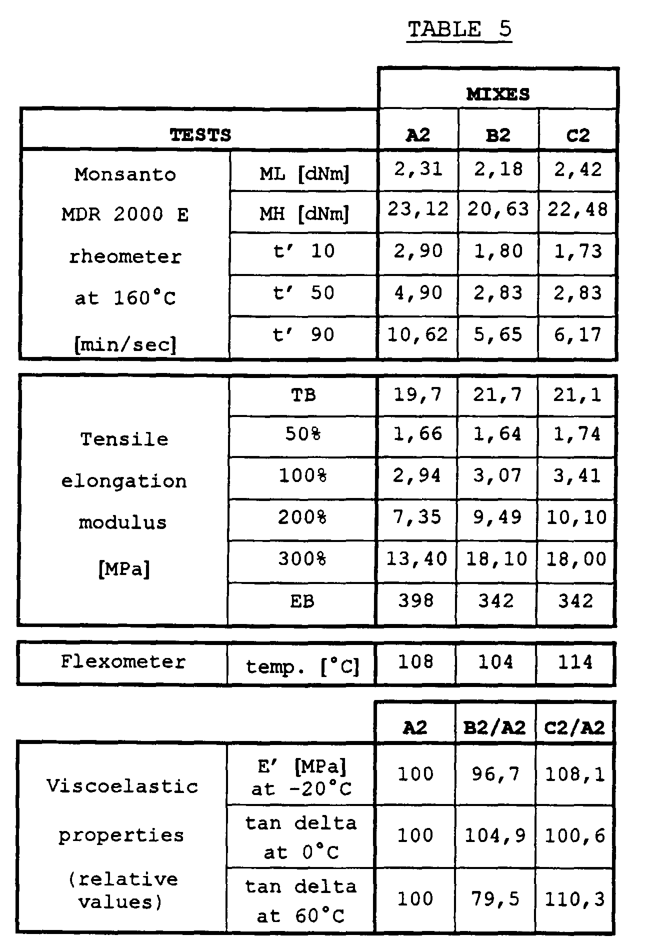

The viscoelastic test results are compared by assigning a value of 100 to the properties of the reference mix (A2) and relating to this the properties of the mixes containing oxidized carbon black (B2 and C2).

In this case also, according to the test results, tires produced from mixes B2 and C2 containing mixtures of traditional and oxidized carbon black may be expected to provide for improved dynamic performance, in particular improved cold and wet weather performance, and a lower rolling resistance as compared with those produced using reference mix A2 containing a mixture of traditional carbon black and silica.

### EXAMPLE 3

In a known mix formulation, oxidized carbon black CK3 was substituted for an equal quantity of traditional carbon black, leaving the other components, including silica, unchanged.

Mixes with the compositions shown in Table 6 were prepared in the same way as in Example 1, and specimens of the mixes were tested, again in the same way as in Example 1, to give the results shown in Table 7.

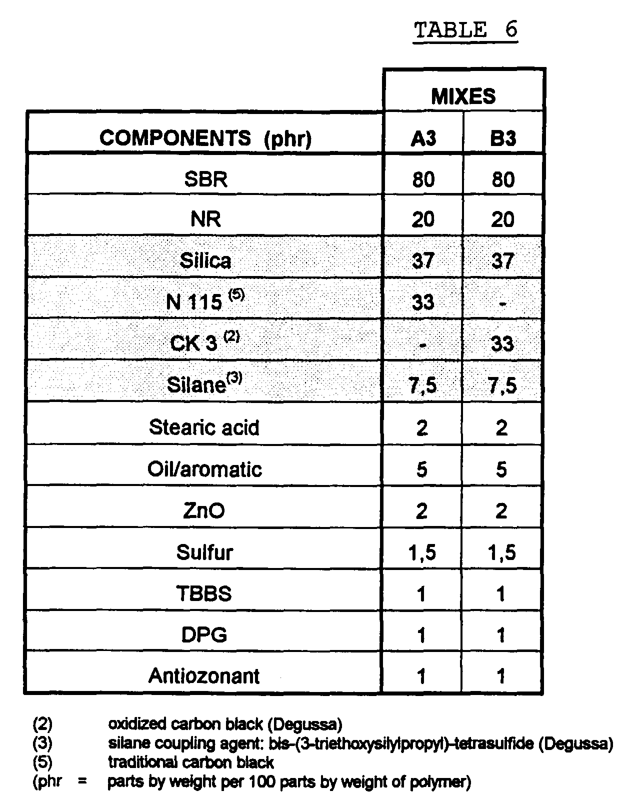

Substituting oxidized for traditional carbon black had no effect on the physical properties of the mix.

Judging from the dynamic properties, as compared with tires produced using the known mix A3, those produced from mix B3 containing a filler comprising a mixture of oxidized carbon black and silica may be expected to provide for improved cold weather performance, substantially the same wet weather performance, and greatly reduced rolling resistance.

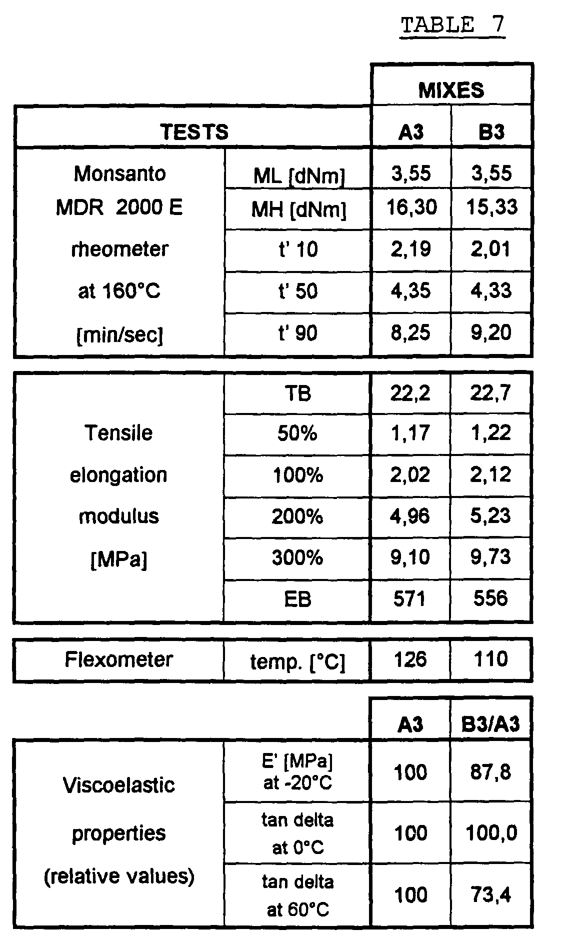

### EXAMPLE 4

Mixes with the compositions shown in Table 8 were prepared in the same way as in Example 1.

The reference mix (A4) contained equal quantities of silica and traditional carbon black (plus 10% by weight of silane in relation to silica).

A first mix (B4) according to the invention was prepared by substituting oxidized carbon black CK3 for the silica only, maintaining the same content of traditional carbon black, and eliminating the silane; and a second mix (C4) was prepared by substituting oxidized carbon black for the entire filler, and again eliminating the silane.

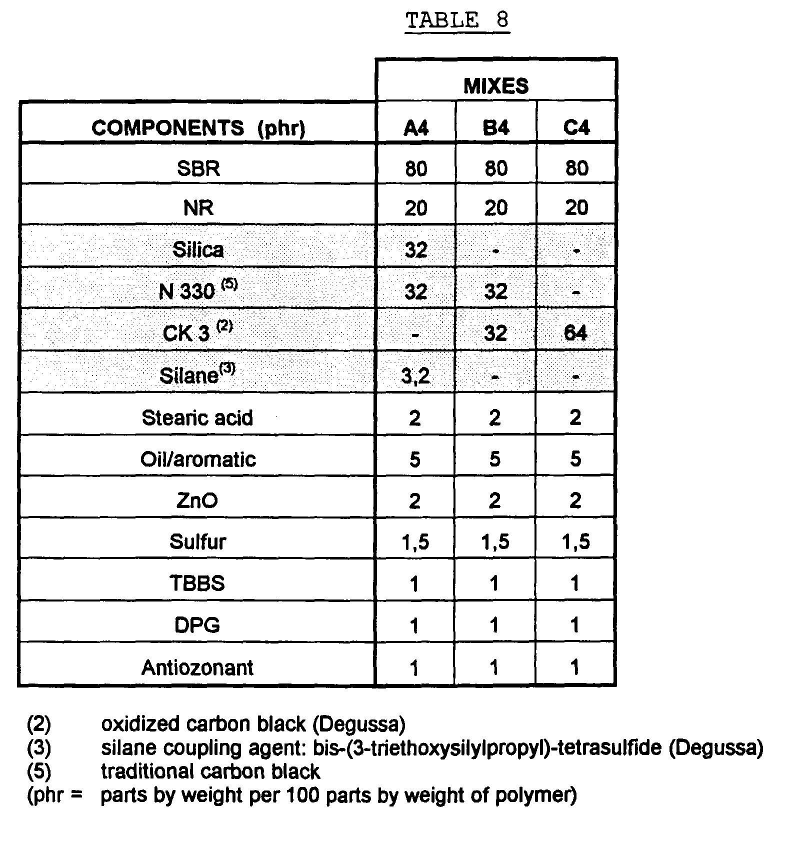

The test results shown in Table 9 confirm the observations made in the previous examples, i.e. tires produced using mixes B4 and C4 may be expected to provide for improved cold and wet weather performance and a lower rolling resistance as compared with those produced using reference mix A4.

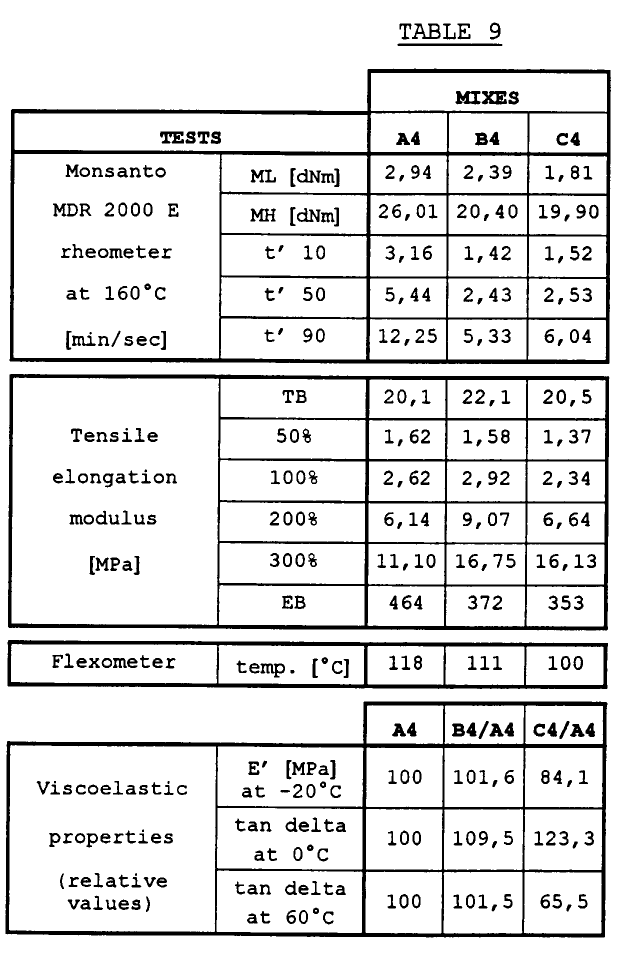

## Claims

1. A curable mix composition, in particular for manufacturing tire treads, comprising at least one elastomer and at least one filler comprising carbon black or mixtures of carbon black and silica; characterized in that at least part of said carbon black is oxidized carbon black.

2. A curable mix composition as claimed in Claim 1, characterized in that said oxidized carbon black comprises particles having a surface concentration of oxygenated groups, calculated as hydroxyl or phenol groups, of at least 5-25 active sites per nm².

3. A curable mix composition as claimed in Claim 2, characterized in that at least 7% of said oxygenated groups is present on the surface of said particles.

4. A curable mix composition as claimed in Claim 2 or 3, characterized in that at least some of said surface oxygenated groups comprise functional groups in which the oxygen atoms are present in the form of lactone and/or ketone and/or quinone and/or carbonyl and/or carboxyl and/or phenol and/or hydroxyl groups.

5. A curable mix composition as claimed in one of the foregoing Claims, characterized in that said particles have a surface area of about 500 to about 2200 nm²/mole.

6. A curable mix composition as claimed in one of the foregoing Claims from 1 to 5, characterized in that said oxidized carbon black is obtained by means of the Degussa gas black process.

7. A curable mix composition as claimed in one of the foregoing Claims from 1 to 5, characterized in that said oxidized carbon black is obtained by means of the channel process.

8. A curable mix composition as claimed in one of the foregoing Claims from 1 to 5, characterized in that said oxidized carbon black is obtained by postprocessing with oxidizing agents carbon blacks having a surface concentration of oxygenated groups of less than about 5 active sites per nm² and prepared by traditional methods.

9. A curable mix composition as claimed in one of the foregoing Claims, characterized by comprising an elastomer in turn comprising at least a diene polymer or copolymer, about 10 to 90 phr (parts by weight per 100 parts by weight of elastomer) of oxidized carbon black, about 0 to 60 phr of traditional carbon black, about 0 to 60 phr of silica, and about 0 to 10 phr of a silane coupling agent.

10. A tire tread formed from the curable mix composition as claimed in Claim 1.

11. A tire comprising a tread as claimed in Claim 10.

12. Use in a curable mix, in particular for producing tire treads, of at least a filler comprising carbon black or mixtures of carbon black and silica; characterized in that at least part of said carbon black is oxidized carbon black.
